Europäisches Patentamt

European Patent Office

Office européen des brevets

(11) Numéro de publication: **0 428 807 A1**

# DEMANDE DE BREVET EUROPEEN

(21) Numéro de dépôt: 89403192.1

(22) Date de dépôt: **20.11.89**

(51) Int. Cl.⁵: **F16B 37/02, F16B 39/12**

(43) Date de publication de la demande:
**29.05.91 Bulletin 91/22**

(84) Etats contractants désignés:
**AT BE CH DE ES GB GR IT LI LU NL SE**

(71) Demandeur: **RAPID S.A.**
**251 Boulevard Péreire**
**F-75852 Paris Cédex 17(FR)**

(72) Inventeur: **Dubost, Dominique**
**53 Résidence Elysées II**
**F-78170 La Celle Saint Cloud(FR)**

(74) Mandataire: **Durand, Yves Armand Louis et al**
**CABINET WEINSTEIN 20, Avenue de**
**Friedland**
**F-75008 Paris(FR)**

(54) **Ecrou autobloquant perfectionné.**

(57) La présente invention concerne un écrou auto-bloquant perfectionné.

Cet écrou est constitué par un feuillard unique découpé et replié sur lui-même de façon à former deux plaques ou parties (3) repliées sur elles-mêmes à la manière d'un U, tandis qu'entre ces deux parties repliées (3) est imbriquée l'une (4) de deux autres plaques ou parties (4, 5) elles aussi repliées sur elles-mêmes à la manière d'un U.

Cet écrou permet un assemblage sûr et quasiment indesserrable de pièces mécaniques quelconques.

Fig. 1

## ECROU AUTOBLOQUANT PERFECTIONNÉ.

La présente invention as essentiellement pour objet un écrou autobloquant perfectionné.

On connaît déjà des écrous autobloquants qui se composent d'une pluralité de plaques indépendantes superposées et maintenues dans une cage, ces plaques étant munies d'orifices et constituant en quelque sorte des rondelles axialement alignées dont les orifices superposés forment taraudage pour un élément fileté tel que par exemple une vis.

De tels écrous sont par exemple décrits dans le document FR-A-1 552 638 et présentent un certain nombre d'inconvénients.

Ils sont délicats et coûteux à fabriquer, car, comme on le comprend, il convient, après empilement des rondelles, de les sertir toutes dans une cage.

En outre, étant donné qu'ils se composent d'une multiplicité d'éléments séparés, leur résistance au desserrage sous l'effet des vibrations, demeure faible.

Enfin, il est difficile, sur de tels écrous, de réaliser un traitement thermique correct en raison de la différence de matière entre la cage et les plaques ou rondelles empilées dans cette cage.

On connaît par ailleurs, d'après le document FR-A-894 966 par exemple, des écrous constitués par un feuillard unique replié sur lui-même à la manière d'un S, mais de tels écrous forment une superposition de filets insuffisante et n'autorisent que de faibles charges axiales sans parler des risques de déformation au vissage.

Aussi, la présente invention a pour but de remédier à ces inconvénients en proposant un écrou autobloquant appartenant à la catégorie d'écrous ci-dessus mentionnée, mais présentant toutes les qualités requises de faible coût, de compacité, de résistance aux charges axiales élevées et à la déformation lors du vissage, et, d'une manière générale, de fiabilité de fonctionnement même dans le cas où l'écrou doit subir des vibrations et/ou une charge axiale importante.

A cet effet, l'invention a pour objet un écrou autobloquant perfectionné du type réalisé à partir d'un feuillard découpé et replié sur lui-même de façon à former au moins deux plaques ou parties repliées sur elles-mêmes à la manière d'un U, caractérisé en ce qu'entre ces deux parties repliées est imbriquée l'une de deux autres plaques ou parties elles aussi repliées sur elles-mêmes à la manière d'un U.

Suivant une autre caractéristique de cet écrou, les plaques ou parties précitées sont embouties en cône et comportent un orifice traversant taraudé dans lequel peut venir en prise un élément fileté.

Suivant encore une autre caractéristique de l'invention, la plaque correspondant à la face d'appui de l'écrou possède des dimensions plus grandes que les autres plaques.

Mais d'autres caractéristiques et avantages de l'invention apparaîtront mieux dans la description détaillée qui suit et se réfère aux dessins annexés, donnés uniquement à titre d'exemple, et dans lesquels :

La figure 1 est une vue en perspective d'un écrou conforme aux principes de l'invention et

La figure 2 est une vue en coupe de cet écrou suivant la ligne II-II de la figure 1.

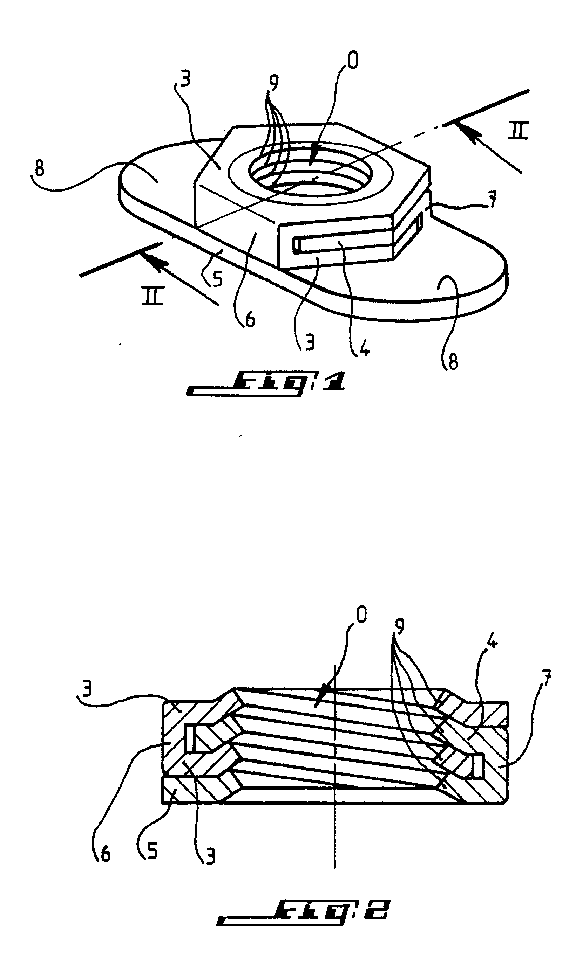

Un écrou conforme à cette invention et tel que visible sur les figures 1 et 2, est réalisé à partir de deux feuillards, chaque feuillard étant découpé et replié sur lui-même à la manière d'un U.

Plus précisément, l'un des U est constitué par deux plaques ou parties repliées 3 et raccordées par une embase 6, tandis que l'autre U est constitué par deux plaques ou parties repliées 4, 5 et raccordées par une embase 7.

La plaque ou partie 4 d'un U est imbriquée entre les deux parties repliées 3 de l'autre U, comme on le voit bien sur les figures.

La plaque ou partie 5 de l'un des U, et constituant la face d'appui de l'écrou peut comporter, bien que cela ne soit nullement obligatoire, des dimensions plus grandes que les plaques adjacentes 3, 4, 3 supérieures et superposées, et cela de façon à réaliser une surface d'appui adéquate pour l'écrou, laquelle surface d'appui est repérée en 8 sur la figure 1. Cette surface d'appui peut bien entendu présenter une forme quelconque et apte à résister au desserrage.

Pour fabriquer l'écrou, on effectue sur chaque feuillard, c'est-à-dire sur les plaques ou parties repliées 3, 4, 5, un emboutissage en cône montré en 9 sur les figures. Ensuite, un perçage est effectué au travers des trois parties repliées et embouties, de sorte que l'écrou, comme on le voit bien sur la figure 2, comporte une succession de cônes 9 superposés qui permettent la retenue ou le maintien imbriqué des deux U l'un dans l'autre.

Après avoir effectué le perçage, un taraudage est exécuté dans ce perçage pour ainsi réaliser finalement un orifice traversant taraudé O dans lequel peut venir en prise un élément fileté quelconque tel que par exemple une vis.

Comme on le voit bien sur la figure 1, l'écrou selon cette invention comporte des pans pour permettre sa manoeuvre par une clé par exemple.

Ces pans peuvent être par exemple au nombre de six et résulter d'un découpage approprié de chacun des deux feuillards repliés en U qui, lorsqu'ils sont imbriqués, constituent l'écrou selon cette invention.

Ainsi, deux pans opposés de cet écrou pourront être constitués, en majeure partie, par les embases ou parties de raccordement 6 et 7 des deux U imbriqués l'un dans l'autre.

On a donc réalisé suivant l'invention un écrou autobloquant perfectionné qui est d'une conception mécanique particulièrement simple et peu coûteuse, mais qui présente avantageusement toutes les qualités voulues de résistance aux charges axiales élevées et à la déformation lors du vissage, étant entendu qu'un tel écrou demeure d'un excellente fiabilité de fonctionnement notamment au regard du desserrage.

Bien entendu, l'invention n'est nullement limitée au mode de réalisation décrit et illustré qui n'a été donné qu'à titre d'exemple.

C'est ainsi que l'écrou de cette invention pourrait être constitué de plus de deux U imbriqués l'un dans l'autre ou même d'un seul U dont les branches seraient superposées et accolées.

C'est dire que l'invention comprend tous les équivalents techniques des moyens décrits ainsi que leurs combinaisons si celles-ci sont effectuées suivant son esprit.

**Revendications**

1. Ecrou autobloquant perfectionné du type réalisé à partie d'un feuillard découpé et replié sur lui-même de façon à former au moins deux plaques ou parties (3) repliées sur elles-mêmes à la manière d'un U, caractérisé en ce qu'entre ces deux parties repliées (3) est imbriquée l'une (4) de deux autres plaques ou parties (4, 5) elles aussi repliées sur elles-même à la manière d'un U.

2. Ecrou selon la revendication 1, caractérisé en ce que les plaques ou parties précitées (3, 4, 5) sont embouties en cône (9) et comportent un orifice traversant taraudé (O) dans lequel peut venir en prise un élément fileté.

3. Ecrou selon la revendication 1 ou 2, caractérisé en ce que la plaque (5) correspondant à la face d'appui de l'écrou possède des dimensions plus grandes que les autres plaques (3, 4).

_Fig.1_

_Fig.2_

4

Office européen des brevets

# RAPPORT DE RECHERCHE EUROPEENNE

Numero de la demande

EP 89 40 3192

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| X | US-A-2170739 (GEORGE A. TINNERMAN)<br>* page 2, colonne de gauche, ligne 67 - page 4, colonne de droite, ligne 71; figures * | 1, 3 | F16B37/02<br>F16B39/12 |
| Y | | 2 | |
| | --- | | |
| Y | US-A-2244823 (JAMES P. BURKE)<br>* page 1, colonne de droite, ligne 14 - page 2, colonne de gauche, ligne 33; figures 1-4 * | 2 | |
| | --- | | |
| E,X | FR-A-2638212 (RAPID S.A.)<br>* page 4, ligne 9 - page 5, ligne 32; figures 1, 6, 7 * | 1-3 | |
| | --- | | |
| A | FR-A-672394 (HENRY CHARLES SMITH)<br>----- | | |

**DOMAINES TECHNIQUES RECHERCHES (Int. Cl.5 )**

F16B

Le présent rapport a été établi pour toutes les revendications

| Lieu de la recherche | Date d'achèvement de la recherche | Examinateur |
|---|---|---|
| LA HAYE | 19 JUILLET 1990 | ARESO Y SALINAS |